# EUROPEAN PATENT SPECIFICATION

(11) **EP 4 532 775 B1**
(45) Date of publication and mention of the grant of the patent: **31.12.2025**
(21) Application number: 23728738.8
(22) Date of filing: 24.05.2023
(51) Int. Cl.: C14C 11/00, C09D 175/04, C09D 175/06, C09D 175/08

(54) **CRUST LEATHER UPGRADE**
VERBESSERUNG VON CRUST LEDER
AMÉLIORATION DE CUIR EN CROÛTE

(30) Priority: 27.05.2022 IT 202200011222
(43) Date of publication of application: 09.04.2025
(73) Proprietor: Lamberti SPA, 21041 Albizzate (VA) (IT)
(72) Inventor: PERATELLO, Stefano, 20842 Besana in Brianza (MB) (IT); PELLIZZARI, Davide, 36071 Arzignano (VI) (IT); PIZZOLATO, Armando, 36071 Arzignano (VI) (IT)
(74) Representative: Giaroni, Paola
(86) International application number: PCT/EP2023/063957
(87) International publication number: WO 2023/227678

(56) References cited:
- DE-A1- 102006 039 261
- US-A1- 2007 074 352
- DATABASE WPI Week 200940, Derwent World Patents Index; AN 2009-J95997, XP002808214

## Description

### FIELD OF THE INVENTION

The present invention relates to a composition and to a method for improving the quality of defective semi-finished leathers (i.e. of crust leather, hereafter also referred to as "crusts") by repairing their defects. The composition comprises a polymeric binder and microspheres; the method renders the surface of the crust smooth, homogeneous and even, ready for the subsequent finishing steps. The invention is set out in the appended set of claims.

### BACKGROUND OF THE ART

It is known that leathers, being of natural origin, after tanning, re-tanning, and drying (crusts, or crust leathers, or semi-finished leathers), may have defects such as holes and scars.

Therefore, crust leather, and especially full grain crust leather, is rarely brought to the finishing processes as it is.

Nowadays, the consolidated technique for the covering of defects (hereafter "repairing"), of full grain crust leather comprises: 1. applying stucco to the crust to fill the defects; 2. drying it and 3. buffing the crust to remove excess stucco and make its surface homogeneous.

Thereafter, the treated repaired and buffed crust can proceed to the finishing steps that typically comprise:
4. applying a basecoat, which in most cases is a pigmented formulation of an acrylic resin that protects the crust and impart it the color that will be visible in the finished product;
5. drying;
6. embossing (optional) that, if carried out, is usually preceded by the application of a nitroemulsion layer and by another drying step, and followed by a treatment in a milling drum;
7. applying an overcoat, or color coat, which is a second layer of a pigmented formulation, most often based on an acrylic resin, used to adjust the color, to create the desired visual effects, to cover the substrate satisfactorily (often the basecoat cannot achieve a perfect coverage) or to give ultra-performance not otherwise obtainable with the topcoat alone. The application of an overcoat is mandatory in case of embossed leather, because in milling the leather gets dirty and it is essential to correct its color before the final transparent topcoat is applied. The overcoat works as a coupling layer for the external layer (topcoat) as well;
8. drying;
9. applying a topcoat, which is a polyurethane based, transparent protective coating;
10. drying.

The drying steps in the finishing process are typically carried out in a heating tunnel at about 60-70°C.

In order to finish properly leathers, it is of the upmost importance that the repairing process results in crusts devoid of depressions and humps (homogeneous).

The main problems encountered in repairing crusts are deeply discussed in the prior art patents.

Prior art repairing techniques often involve the use of synthetic binders including hollow expanded microspheres or hollow expandable microspheres.

In a well-known repairing technique, a composition, comprising water-based binder, typically of the acrylic and/or polyurethane type, fillers (such as inorganic silica and kaolin) and, optionally, expanded microspheres, is applied with a spatula or by machine and dried; however, the water removal causes the volume of the applied material to contract and to leave depressions.

US 6,746,774 discloses a similar repairing treatment, performed on the backside of the crust with a layer incorporating "bubbles". The layer can be built with or even without microspheres, through incorporation of a foaming agent; a heat curing process solidifies the layer and water is said to be at least partially absorbed by the leather. The volume reduction is not a concern here, because the surface of the backside of the crust has much less quality requirements that the upper side.

In the process disclosed in AT 6040, which repairs the backside of crusts too, the presence of expandable microspheres is essential; the process is characterized by the heating mode (short time exposure to hot air) and results in mushroom-like structures.

DE 102006039261 describes a method for reparing and finishing defective crust leather by applying a foamable composition comprising synthetic polymers and unexpanded microspheres as primer at elevated temperature, drying and applying a polyurethane-based matte top coat on the foamed layer. It is silent about the combination of expandable and expanded microsphere.

US 2007/0074352 repairs the upper side of the crusts with an aqueous dispersion of a binder that contains expandable microspheres that, when subjected to heat and pressure, are able to generate expanded microspheres. According to the description, the particles expansion, induced by temperature and pressure, allows completely filling the valleys (defects); however, this goal is later contested by the (same) inventor in EP2004864, which attributes to some permanent deformation induced by the pressure the persistence of depressions that must be removed mechanically. US4016326 and EP 2004864 both apply on a leather support a layer made from an aqueous binder containing expandable microspheres, but simultaneously dry and expand them by IR radiation. The specific wavelength used by EP 2004864 is said to solve all the problems caused by the thermal and pressure treatments of US 2007/0074352: the leather does not deform, does not harden, all the microspheres expand, imperfections are repaired.

However, the use of expandable microspheres may be impaired by their remarkable increase in volume (up to sixty times), so that the resulting filled crust typically require mechanical abrasion (buffing).

As far as the applicant knows, in the prior art, a repairing process of crusts by the use of a composition that does not requires any of high temperature, and pressure and that, without mechanical abrasion, results in an homogenous surface, devoid of depressions is not known.

It has now been found that such a repairing process of defective crusts can be performed by the application of a repairing aqueous composition comprising a polymeric binder and both hollow expanded microspheres (hereafter "expanded microspheres") and hollow expandable microspheres (hereafter "expandable microspheres").

The combined use of expanded and expandable microspheres can perfectly fill the gaps (scratches, natural defects and holes) while creating a homogeneous flat coating on the crusts that does not need mechanical abrasion.

Without being bound to any theory, it may be supposed that the portion of lighter expanded microspheres uniformly migrates to the surface of the still wet coating layer, while water evaporates, contributing to its final homogeneity, while the controlled amount of the expandable microspheres sinks in the depression where they finally expand, compensating in volume the water loss and filling the gaps.

The method of the disclosure is particularly valuable because it allows to obtain a non-abraded full grain leather article from defective full grain crusts, thanks to the fact that the buffing step, or any other abrasion step, required in the prior art methods, is avoided.

It has also been found that the repairing composition according to this disclosure may also perform the functions of basecoat composition. In other terms, the repairing composition and the method of this disclosure may allow to skip one finishing step (basecoat application) and one drying step (as well as allowing skipping the buffing step typically following the stucco process). Of course, this is extremely advantageous in terms of time, energy saving and costs.

### SUMMARY OF THE INVENTION

Accordingly, the aqueous composition for repairing crusts comprises expanded microspheres and expandable microspheres, polymeric binder and optionally other additives, such as rheology modifiers, oils and fillers. The method for repairing defective crust leathers of the disclosure comprises: i) applying on the defective crust leather a layer of the above aqueous composition comprising expanded and expandable microspheres, polymeric binder and optionally other additives, such as rheology modifier, oil, filler; ii) drying the layer and expanding the expandable microspheres.

The disclosure further pertains to a method of repairing and finishing defective crust leathers comprising: A) repairing the defective crust leathers by i) applying on the crusts a layer of an aqueous composition comprising expanded and expandable microspheres, polymeric binder and optionally other additives, such as rheology modifier, oil, filler; ii) drying the layer and expanding the expandable microspheres; B) finishing the crust leathers obtained from step ii) without mechanically abrading their surface.

### BRIEF DESCRIPTION OF THE DRAWINGS

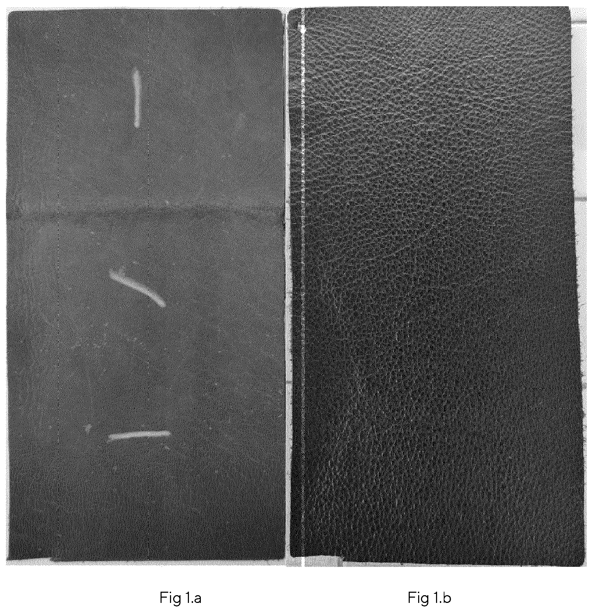

Fig 1-5 respectively show the starting and finished defective crust of the Examples 1-5.

Example 1, 3 and 4 represent methods of the state of the art.

Examples 2 and 5 represent the method of this disclosure.

### DETAILED DESCRIPTION OF THE INVENTION

The aqueous composition for repairing crust leathers essentially comprises:
(a) from 0.05 to 8 wt% (weight percent), preferably from 0.2 to 3 wt%, more preferably from 0.5 to 2.5 wt%, of expandable microspheres and expanded microspheres, in weight ratio from 0.1 to 5 , preferably from 0.2 to 1, the weight percentages being referred to the sum of expanded and expandable microspheres on the weight of the composition,
(b) from 10 to 40 wt%, preferably from 15 to 40 wt%, of polymeric binder,
(c) from 50 to 80 wt%, preferably from 60 to 80 wt%, of water.

Advantageously, the above aqueous composition additionally comprises at least one additive chosen among rheology modifier, oil and filler in the following amounts:
(d) from 0 to 3 wt%, preferably from 0.5 to 2 wt%, of rheology modifier,
(e) from 0 to 3 wt%, preferably from 0.5 to 2 wt%, of oil,
(f) from 0 to 10 wt%, preferably from 1 to 6 wt%, of filler.

Most advantageously, the repairing aqueous composition additionally comprises:
(d) from 0.5 to 2 wt% of rheology modifier,
(e) from 0.5 to 2 wt% of oil,
(f) from 1 to 6 wt% of filler.

The weight percentages of (b)-(f) are also referred to the weight of the repairing aqueous composition.

The expandable microspheres may have a diameter from about 2 to 60 microns, preferably from 5 to 35 microns, more preferably from 10 to 20 microns, even more preferably from 10 to 16 microns (before expansion). Preferred expandable microspheres are those that undergo expansion, at atmospheric pressure, at temperature from about 80 °C (start temperature) to about 190 °C (end temperature). Particularly preferred are expandable microspheres with a start temperature of about 80-95 °C and an end temperature of about 120-140 °C.

The expanded microspheres may have a diameter from about 10 to 150 microns, preferably from 15 to 100 microns, more preferably from 15 to 50 microns, even more preferably from 20 to 30 microns, and are characterized by their very low true density, typically from about 20 to about 50 Kg/m³, as measured by picnometer.

Both the expandable microspheres and the expanded microspheres that can be used typically contain, as blowing agent, a hydrocarbon having boiling point below the softening point of the shell of the microspheres, such as, n-butane or iso-butane, n-pentane, neopentane, iso-pentane, iso-butane being preferred; other blowing agents may be used.

The shell of the expandable microspheres and of the expanded microspheres is preferably composed of an organic polymer or copolymer. Monomers suitable for the synthesis of the shell of the hollow microspheres are acrylonitrile, (meth)acrylates such as ethyl acrylate, methyl acrylate, methyl methacrylate, isobornyl methacrylate and hydroxyethyl methacrylate, vinyl halides, such as vinyl chloride and vinylidene chloride, vinyl esters, such as vinyl acetate and vinyl formate, styrene, substituted styrene compounds. The polymer or copolymer may be crosslinked, by way of examples with minor amounts of polyunsaturated compounds, for example of allyl methacrylate, diallylmaleate, ethylene glycol dimethacrylate, diethylene glycol dimethacrylate, triethylene glycol dimethacrylate, polyethylene glycol dimethacrylate, trimethylolpropane triacrylate, pentaerythritol tetraacrylate. Vinylidene chloride, (meth)acrylate monomers and acrylonitrile are the preferred monomers.

Polyurethanes are also suitable as shell material of the expandable microspheres and of the expanded microspheres.

Expandable microspheres and expanded microspheres are commercially available, by way of examples, from Nouryon, respectively under the trade name Expancel^{®} DU or WU (expandable, or unexpanded) and DE or WE (expanded).

The polymeric binder is preferably chosen among emulsion polymers (e.g. among emulsion (meth)acrylic polymers and copolymers, styrene butadiene copolymers, styrene (meth)acrylic copolymers, vinyl acrylic copolymers, and combinations thereof) and water based dispersion polymers.

The polymeric binder may be un-crosslinked or crosslinked.

Mixtures of polymeric binders may be used.

It is preferable that the polymeric binder has Tg lower than 30 °C, more preferably Tg lower than 10 °C and especially Tg lower than 0 °C, and in any case Tg higher than -50 °C, the Tg being measured according to the ASTM D6604-00 (2017) standard.

By "soft polymer" we mean here a polymer (or copolymer) having a Tg lower than 30 °C (and higher than -50 °C).

A particularly preferred polymeric binder is a soft, (meth)acrylic, emulsion copolymer, typically obtainable by polymerization of at least 90 wt% of one or more (meth)acrylic esters (such as ethyl acrylate, n-butyl acrylate, ethyl hexyl acrylate) and less than 10 wt% of one or more an unsaturated carboxylic acid, such as methacrylic acid, acrylic acid, itaconic acid.

Water based polyurethane dispersions may also be used as the binder. Another polymeric binder which is particularly suitable is a mixture of a soft, (meth)acrylic, emulsion copolymer and of a soft polyurethane.

The rheology modifier may be chosen among associative polyurethane thickeners, polyacrylic thickeners, or thickeners that are derivatives of polysaccharides.

Advantageously, the rheology modifier is a mixture of an associative polyurethane thickener and of a polyacryic thickener.

The preferred polyacrylic thickeners are emulsion polyacrylic thickeners. Suitable emulsion polyacrylic thickeners are emulsion alkali swellable acrylic thickeners (ASE), possibly including associative hydrophobic monomers (HASE), crosslinked or non-crosslinked.

ASE and HASE are most often based on methacrylic acid (typically representing from 30 to 40 wt% of the thickener) and ethyl acrylate (typically representing from 60 to 70 wt% of the thickener).

The rheology modifier are dosed to bring the viscosity of the repairing aqueous composition between 500 and 30,000 mPa*s. The aqueous composition is pourable.

In a preferred embodiment, the aqueous composition also contains at least one oil, that help retarding the drying of the composition itself during application, and one or more fillers, that reduce gloss and stickiness of the final leather.

The preferred oil is a mineral oil, but vegetable oils may also be used.

The filler may be organic or inorganic and it is preferably an inorganic filler, more preferably silica, kaolin or mixtures thereof.

The method of repairing defective crust leathers, comprises: i) applying on the defective crust leather a layer of the above repairing aqueous composition comprising expanded and expandable microspheres and polymeric binder, typically by spraying or by roller coating, preferably by roller coating; ii) drying the aqueous layer and expanding the expandable microspheres by heat treatment.

The amount of repairing composition applied in step i) of the method is typically from 0.2 to 5 and preferably from 0.5 to 2.0 g (dry matter) per square foot, i.e. typically from 2.2 to 21.5 and preferably from 5.4 to 21.7 g/m² (1 square foot = 0.092903 m²).

In an advantageous embodiment, step ii) is performed in two consecutive distinct sub-steps: ii-1 and ii-2.

In ii-1 the aqueous layer is dried at temperature from 50 to 80 °C, in ii-2 the expandable microspheres are expanded at their characteristic expansion temperature, typically between 80 and 190 °C, preferably between 80 and 140 °C, depending on the expandable microspheres characteristics and method of expansion.

The sub-step ii-1 is preferably performed in a heating tunnel or by IR irradiation, more preferably by IR irradiation; sub-step ii-2 is preferably performed by rotopressing or by IR irradiation, more preferably by IR irradiation.

In a particularly preferred embodiment, sub-step ii-1 and ii-2 are both performed by IR irradiation, respectively at about 60 °C and at about 120 °C, because this kind of thermal irradiation allows only surface heating, thus not deteriorating the leather.

The repaired crust leathers obtained from the above method can directly proceed to the finishing steps, without being subjected to any mechanical abrasion, such as buffing; the appearance and quality of the leather surface is therefore preserved. The method of the disclosure is therefore particularly suitable for the reparation of full grain crusts.

Most advantageously, in the subsequent finishing process, such repaired full grain crust leathers may directly undergo embossing (possibly with its auxiliary by-treatments), or, if embossing is not needed, may directly undergo overcoat application, followed by the other conventional steps of the finishing process. In other words, usually, there is no need to apply and dry a separate basecoat before embossing or before the overcoat application.

The finished and repaired crust leathers of the present disclosure may be used for the full variety of high quality leather goods: leatherwear, automotive and furniture upholstery, leather accessories and the like.

The advantages of the repairing compositions and of the methods of the present disclosure are reflected in the here below examples.

### EXAMPLES

In the following examples, the following products were used:

| | |
|---|---|
| Binder PA-1: | Soft, un-crosslinked acrylic copolymer (made from about 95 wt% acrylic esters and about 5% unsaturated carboxylic acid) provided in the compositions emulsified in water at about 35 wt% |
| Binder PA-2: | Soft, crosslinked acrylic polymer (made from about 96 wt% acrylic esters and about 4 wt% unsaturated carboxylic acid) provided in the compositions emulsified in water at 35 wt% |
| Binder PU-1: | Anionic polyester based polyurethane provided in the compositions dispersed in water at 35 wt% |
| Binder PU-2: | Polyurethane acrylate dispersion provided in the compositions dispersed in water at 40 wt% |
| Binder PU-3: | Anionic cycloaliphatic polyether based polyurethane provided in the compositions dispersed in water at 30 wt% |
| Binder PU-4: | Anionic cycloaliphatic polycarbonate-polyester based polyurethane provided in the compositions dispersed in water at 35 wt% |
| WE-MS: | Wet Expanded microspheres from Nouryon (d50 20-30 µm; density 32-40 Kg/m³), about 15 wt% |
| WU-MS: | Wet Expandable microspheres from Nouryon (d50 10-16 µm; density ≤12 Kg/m³), about 80 wt% |
| Filler-1: | Kaolin based filler, about 60 wt% |
| Filler-2 | Kaolin and silica based filler, about 25 wt% |
| Filler-3: | Silica based filler, about 100 wt% |
| Oil: | Morbidol GS from Lamberti SpA, about 100 wt% |
| RM-1: | Polyacrylic thickener (ASE) provided in the compositions emulsified in water at about 30 wt% |
| RM-2: | Polyurethane thickener; provided in the compositions dispersed in water at about 20 wt% |
| Crosslinker-1: | Polyurea crosslinker, about 30 wt% |
| Crosslinker-2: | Isocyanate crosslinker, unreacted NCO about 10%, about 70 wt% |
| Crosslinker-3: | Isocyanate crosslinker, unreacted NCO about 15%, about 70 wt% |
| Pigment: | Covering pigment paste in water dispersion |
| Silicon resin: | Polyurethane silicone resin |
| Matting agent: | Polyurethane based matting agent |

### Example 1 - Conventional stucco repairing process (Comparative).

The following repairing composition (d.m = dry matter) is prepared and applied with a spatula on a defective full grain crust leather (Fig. 1a):

| Product | d.m. wt % |
|---|---|
| Binder PA-1 | 20 |
| WE-MS | 1.5 |
| Filler-1 | 5 |
| Oil | 1 |
| RM-1 | 1.5 |
| Water | 71 |

The leather is dried, buffed and 32 g/m² d.m. of the following basecoat composition are applied by spraying I:

| Product | d.m. wt % |
|---|---|
| Binder PA-1 | 20 |
| Filler-2 | 5 |
| RM-1 | 1 |
| Crosslinker-1 | 0.5 |
| Pigment | 4 |
| Water | 69.5 |

The leather is dried, 1.2 g/m² d.m. of a nitroemulsion are applied by spraying and dried; subsequently the leather is embossed and milled and 10.7 g/m² d.m. of the following overcoat composition are applied by spraying:

| Product | d.m. wt % |
|---|---|
| Binder PA-1 | 20 |
| Filler-2 | 5 |
| RM-1 | 1 |
| Crosslinker-1 | 1 |
| Pigment | 4 |
| Water | 69 |

The leather is dried and 4.8 g/m² d.m. of the following topcoat composition are applied by spraying, and dried:

| Product | d.m. wt % |
|---|---|
| Binder PU-1 | 10 |
| Filler-3 | 2 |
| Silicon resin | 3 |
| RM-2 | 1 |
| Crosslinker-2 | 3 |
| Water | 81 |

The resulting article is a buffed finished leather with homogeneous and defect-free appearance (Fig.1b).

### Example 2 - Reparing and finishing of a defective full grain crust leather

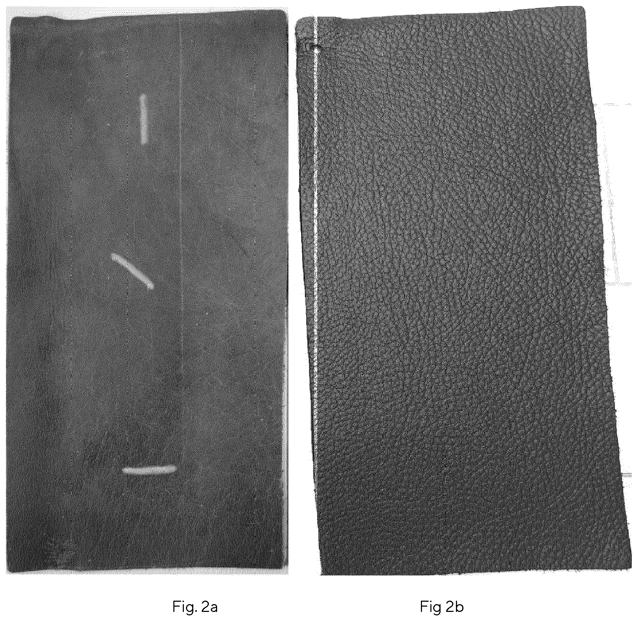

The following repairing composition is prepared by mixing the ingredients and 13.4 g/m² d.m. of the composition are applied on a defective full grain crust leather (Fig. 2a) by roller coat:

| Product | d.m. wt % |
|---|---|
| Binder PA-2 | 12 |
| Binder PU-2 | 8 |
| WU-MS | 0.5 |
| WE-MS | 1.0 |
| Filler-2 | 2.5 |
| Oil | 1.0 |
| RM-1 | 1.0 |
| Diaminoethylethanol | 1.0 |
| Water | 74 |

The leather is dried at about 60°C and thereafter the microspheres are expanded by IR radiation at about 120°C.

1.21 g/m² d.m. of a nitroemulsion are applied by spraying and dried; subsequently the leather is embossed and milled.

10.7 g/m² d.m. of the following overcoat composition are then applied by spraying:

| Product | d.m. wt % |
|---|---|
| Binder PA-1 | 20 |
| Filler-2 | 5 |
| RM-1 | 1 |
| Crosslinker-1 | 1 |
| Pigment | 4 |
| Water | 69 |

The leather is dried and 4.8 g/m² d.m. of the following topcoat composition are applied by spraying and dried:

| Product | d.m. wt % |
|---|---|
| Binder PU-1 | 10 |
| Filler-3 | 2 |
| Silicon resin | 3 |
| RM-2 | 1 |
| Crosslinker-2 | 3 |
| Water | 81 |

The resulting article is a full grain finished leather characterized by homogeneous and defect-free appearance (Fig 2b), useful for furniture upholstery. Being un-buffed, the resulting article is of higher quality than the article obtained from Comparative Example 1.

### Example 3 - Reparing and finishing of a defective full grain crust leather, (Comparative)

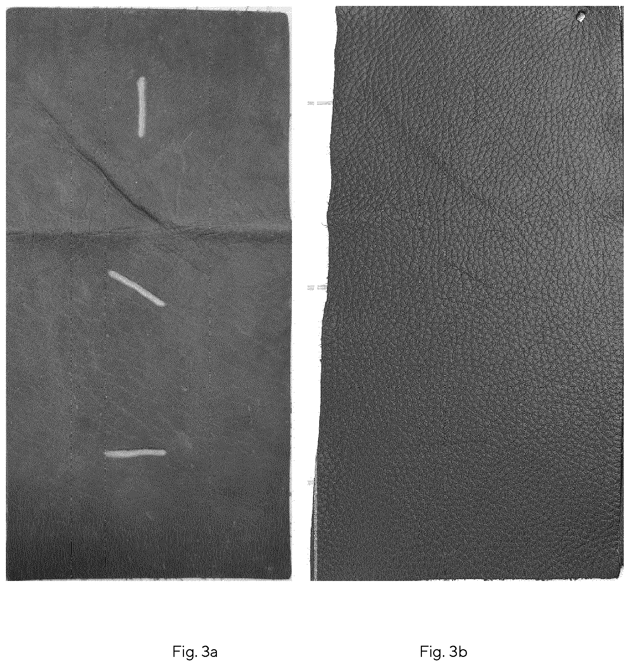

Example 2 is repeated but using only expandable microspheres, according to EP 2004864. The following repairing composition is prepared by mixing the ingredients and 13.4 g/m² d.m. of the composition are applied on a defective full grain crust leather (Fig 3a) by roller coat:

| Product | d.m. wt % |
|---|---|
| Binder PA-2 | 12 |
| Binder PU-2 | 8 |
| WU-MS | 1.5 |
| Filler-2 | 2.5 |
| Oil | 1.0 |
| RM-1 | 1.0 |
| Diaminoethylethanol | 1.0 |
| Water | 74 |

The leather is dried at about 60°C and thereafter the microspheres are expanded by IR radiation at about 120°C.

1.21 d/m² a.m. of a nitroemulsion are applied by spraying and dried; subsequently the leather is embossed and drummed.

10.7 g/m² d,m. of the overcoat composition used in Example 1 are then applied by spraying.

The leather is dried and 4.8 g/m² d.m. of the topcoat composition used in Example 2 are applied by spraying and dried.

The resulting full grain finished leather still shows trace of the defects (Fig. 3b). Example 4 - Reparing and finishing of a defective full grain crust leather

### (Comparative)

Example 2 is repeated but using only expanded microspheres.

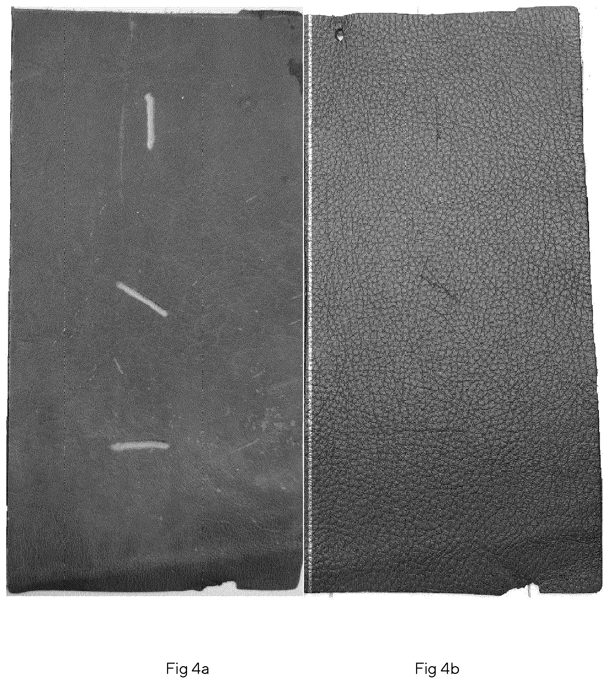

The following repairing composition is prepared by mixing the ingredients and 13.4 g/m² d,m. of the composition are applied on a defective full grain crust leather (Fig 4a) by roller coat:

| Product | d.m. wt % |
|---|---|
| Binder PA-2 | 12 |
| Binder PU-2 | 8 |
| WE-MS | 1.5 |
| Filler-2 | 2.5 |
| Oil | 1.0 |
| RM-1 | 1.0 |
| Diaminoethylethanol | 1.0 |
| Water | 74 |

The leather is dried at about 60 °C.

1,21 g/m² d.m. of a nitroemulsion are applied by spraying and dried; subsequently the crust is embossed and drummed.

10,7 g/m² d.m. of the overcoat composition used in Example 1 are then applied by spraying.

The leather is dried and 4,8 g/m² d.m. of the topcoat composition used in Example 2 are applied by spraying and dried.

The resulting full grain finished leather still shows trace of the defects (Fig. 4b).

### Example 5 - Reparing and finishing of a defective full grain crust leather for automotive upholstery

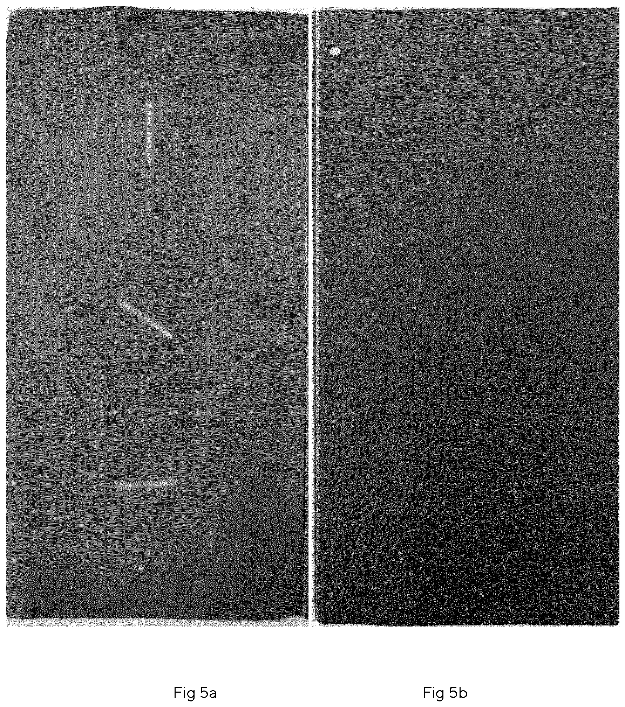

The following repairing composition is prepared by mixing the ingredients and 13.4 g/m² d.m. of the composition are applied on a defective full grain crust leather (Fig 5a) by roller coat:

| Product | d.m. wt % |
|---|---|
| Binder PA-2 | 10 |
| Binder PU-3 | 15 |
| WU-MS | 0.3 |
| WE-MS | 0.7 |
| Filler-2 | 2.5 |
| Oil | 1.0 |
| RM-1 | 1.0 |
| Diaminoethylethanol | 1.0 |
| Water | 68 |

The leather is dried at about 60°C and thereafter the microspheres are expanded by IR radiation at about 120°C.

1.21 g/m² d.m. of a nitroemulsion are applied by spraying and dried; subsequently the leather is embossed and milled.

10.7 g/m² d.m. of the following overcoat composition are then applied by spraying:

| Product | d.m. wt % |
|---|---|
| Binder PU-2 | 20 |
| Filler-2 | 5 |
| RM-1 | 1 |
| Crosslinker-3 | 1 |
| Pigment | 4 |
| Water | 69 |

The leather is dried and 4.8 g/m² d.m. of the following topcoat composition are applied by spraying and dried:

| Product | d.m. wt % |
|---|---|
| Binder PU-4 | 5 |
| Matting agent | 12 |
| Silicon resin | 3 |
| RM-2 | 1 |
| Crosslinker-3 | 3 |
| Water | 76 |

The resulting article is a full grain, un-buffed, finished leather characterized by homogeneous and defect-free appearance (Fig. 5b).

## Claims

1. Aqueous composition for repairing defective crust leathers comprising:
(a) from 0.05 to 8 wt% of expandable microspheres and expanded microspheres, in weight ratio from 0.1 to 5, the weight percentage being referred to the sum of expanded and expandable microspheres on the weight of the composition
(b) from 10 to 40 wt% of one or more polymeric binder
(c) from 50 to 80 wt% of water,
the weight percentages of (b)-(c) being referred to the weight of the composition.

2. Aqueous composition according to claim 1 comprising:
(a) from 0.2 to 3 wt% of expandable microspheres and expanded microspheres, in weight ratio from 0.2 to 2.

3. Aqueous composition according to claim 1 or 2 further comprising at least one of rheology modifier, mineral oil and filler in the following amounts:
(d) from 0 to 3 wt% of rheology modifier,
(e) from 0 to 3 wt% of mineral oil
(f) from 0 to 10 wt% of filler, the weight percentages of (d)-(f) being referred to the weight of the composition.

4. Aqueous composition according to claim 3 comprising
(d) from 0.5 to 2 wt% of a rheology modifier,
(e) from 0.5 to 2 wt% of a mineral oil
(f) from 1 to 6 wt% of a filler.

5. Aqueous composition according to claim 1 wherein the polymeric binder has Tg lower than 30 °C and higher than -50 °C, the Tg being measured according to the ASTM D6604-00 (2017) standard.

6. Method of repairing defective crust leathers comprising: i) the application on the defective crust leather of a layer of the repairing aqueous composition of any of claims from 1 to 5; ii) drying the aqueous layer and expanding the expandable microspheres by heat treatment.

7. Method for repairing defective crust leather according to claim 6 in which step ii) is performed in two consecutive sub-steps: ii-1, in which the aqueous layer is dried at a temperature of 50 to 80 °C, and ii- 2, in which the expandable microspheres are expanded.

8. Method of repairing defective crust leathers according to claim 6 or 7 further **characterized by** the fact that the leather obtained from step ii) are not subjected to mechanical abrasion.

9. Method of repairing and finishing defective crust leathers comprising
A) performing the steps i) and ii) of the method of claim 6, 7 or 8, and
B) finishing the leathers obtained from step ii).

10. Method of repairing and finishing defective crust leathers according to claim 9 wherein step B comprises the following steps: iii) without applying a basecoat directly applying an overcoat on the repaired crusts from step A and drying; iv) optionally applying on the color coated leather a nitroemulsion, embossing and drum drying; and v) applying on the leather from step iii) or iv) a topcoat and drying.

## Patentansprüche

1. Wässrige Zusammensetzung zur Reparatur von fehlerhaften Crustledern, umfassend:
(a) 0,05 bis 8 Gew.-% expandierbare Mikrokügelchen und expandierte Mikrokügelchen in einem Gewichtsverhältnis von 0,1 bis 5, wobei sich der Gewichtsprozentsatz auf die Summe der expandierten und expandierbaren Mikrokügelchen bezogen auf das Gewicht der Zusammensetzung bezieht
(b) 10 bis 40 Gew.-% eines oder mehrerer polymerer Bindemittel
(c) 50 bis 80 Gew.-% Wasser
wobei sich die Gewichtsprozentsätze von (b) - (c) auf das Gewicht der Zusammensetzung beziehen.

2. Wässrige Zusammensetzung gemäß Anspruch 1, umfassend:
(a) 0,2 bis 3 Gew.-% expandierbare Mikrokügelchen und expandierte Mikrokügelchen in einem Gewichtsverhältnis von 0,2 bis 2.

3. Wässrige Zusammensetzung gemäß Anspruch 1 oder 2, die zusätzlich mindestens eines von einem Rheologiemodifikator, einem Mineralöl und einem Füllstoff in den folgenden Mengen umfasst:
(d) 0 bis 3 Gew.-% von Rheologiemodifikator,
(e) 0 bis 3 Gew.-% von Mineralöl
(f) 0 bis 10 Gew.-% von Füllstoff
wobei sich die Gewichtsprozentsätze von (d) - (f) auf das Gewicht der Zusammensetzung beziehen.

4. Wässrige Zusammensetzung nach Anspruch 3, umfassend
(d) 0,5 bis 2 Gew.-% eines Rheologiemodifikators,
(e) 0,5 bis 2 Gew.-% eines Mineralöls
(f) 1 bis 6 Gew.-% eines Füllstoffs.

5. Wässrige Zusammensetzung nach Anspruch 1, wobei das polymere Bindemittel eine Tg von weniger als 30 °C und mehr als -50 °C aufweist, wobei die Tg gemäß der Norm ASTM D6604-00 (2017) gemessen wird.

6. Verfahren zur Reparatur von fehlerhaften Crustledern, umfassend: i) das Aufbringen einer Schicht der reparierenden wässrigen Zusammensetzung gemäß einem der Ansprüche 1 bis 5 auf dem fehlerhaften Crustleder; ii) das Trocknen der wässrigen Schicht und das Ausdehnen der expandierbaren Mikrokügelchen durch Wärmebehandlung.

7. Verfahren zur Reparatur von fehlerhaftem Crustleder gemäß Anspruch 6, bei dem Schritt ii) in zwei aufeinanderfolgenden Teilschritten durchgeführt wird: ii-1, bei dem die wässrige Schicht bei einer Temperatur von 50 bis 80 °C getrocknet wird, und ii-2, bei dem die expandierbaren Mikrokügelchen expandiert werden.

8. Verfahren zum Reparieren von fehlerhaften Crustledern gemäß Anspruch 6 oder 7, das ferner **dadurch gekennzeichnet ist, dass** das aus Schritt ii) erhaltene Leder keiner mechanischen Abrasion unterzogen wird.

9. Verfahren zum Reparieren und Veredeln von fehlerhaften Crustledern, umfassend
A) Durchführen der Schritte i) und ii) des Verfahrens gemäß Anspruch 6, 7 oder 8 und
B) Veredeln der aus Schritt ii) erhaltenen Leder.

10. Verfahren zum Reparieren und Veredeln von fehlerhaften Crustledern gemäß Anspruch 9, wobei Schritt B die folgenden Schritte umfasst: iii) ohne Auftragen einer Grundierung direktes Auftragen einer Überschicht auf die reparierten Crustleder aus Schritt A und Trocknen; iv) optionales Auftragen einer Nitroemulsion auf das farbbeschichtete Leder, Prägen und Trommeltrocknen; und v) Auftragen einer Deckschicht auf das Leder aus Schritt iii) oder iv) und Trocknen.

## Revendications

1. Composition aqueuse pour la réparation de cuirs en croûte défectueux comprenant :
a) de 0,05 à 8 % en poids de microsphères expansibles et de microsphères expansées, dans un rapport en poids de 0,1 à 5, le pourcentage en poids étant rapporté à la somme des microsphères expansées et expansibles sur le poids de la composition
b) de 10 à 40 % en poids d'un ou plusieurs liants polymères
c) de 50 à 80 % en poids d'eau
les pourcentages en poids de (b)-(c) étant rapportés au poids de la composition.

2. Composition aqueuse selon la revendication 1 comprenant :
(a) de 0,2 à 3 % en poids de microsphères expansibles et de microsphères expansées, dans un rapport en poids de 0,2 à 2.

3. Composition aqueuse selon la revendication 1 ou 2 comprenant en outre au moins un modificateur de rhéologie, une huile minérale et une charge dans les quantités suivantes :
d) de 0 à 3 % en poids de modificateur de rhéologie,
e) de 0 à 3 % en poids d'huile minérale
f) de 0 à 10 % en poids de charge, les pourcentages en poids de (d)-(f) étant rapportés au poids de la composition.

4. Composition aqueuse selon la revendication 3 comprenant
d) de 0,5 à 2 % en poids d'un modificateur de rhéologie,
e) de 0,5 à 2 % en poids d'une huile minérale
f) de 1 à 6 % en poids d'une charge.

5. Composition aqueuse selon la revendication 1 dans laquelle le liant polymère a une Tg inférieure à 30 °C et supérieure à -50 °C, la Tg étant mesurée selon la norme ASTM D6604-00 (2017).

6. Procédé de réparation de cuirs en croûte défectueux comprenant : i) l'application sur le cuir en croûte défectueux d'une couche de la composition aqueuse de réparation de l'une quelconque des revendications de 1 à 5 ; ii) le séchage de la couche aqueuse et l'expansion des microsphères expansibles par traitement thermique.

7. Procédé de réparation de cuirs en croûte défectueux selon la revendication 6 dans lequel l'étape ii) est réalisée en deux sous-étapes consécutives : ii-1, dans laquelle la couche aqueuse est séchée à une température de 50 à 80 °C, et ii- 2, dans laquelle les microsphères expansibles sont expansées.

8. Procédé de réparation de cuirs en croûte défectueux selon la revendication 6 ou 7, **caractérisé en outre par le fait que** les cuirs obtenus à l'étape ii) ne sont pas soumis à une abrasion mécanique.

9. Procédé de réparation et de finition de cuirs en croûte défectueux comprenant
A) la réalisation des étapes i) et ii) du procédé de la revendication 6, 7 ou 8, et
B) la finition des cuirs obtenus à l'étape ii).

10. Procédé de réparation et de finition de cuirs en croûte défectueux selon la revendication 9, dans lequel l'étape B comprend les étapes suivantes : iii) sans appliquer de couche de base, appliquer directement une surcouche sur les croûtes réparées de l'étape A et sécher ; iv) appliquer éventuellement sur le cuir coloré une nitroémulsion, gaufrer et sécher au tambour ; et v) appliquer sur le cuir de l'étape iii) ou iv) une couche de finition et sécher.
